(19) Europäisches Patentamt
European Patent Office
Office européen des brevets

(11) EP 2 682 418 B1

(12) EUROPEAN PATENT SPECIFICATION

(45) Date of publication and mention
of the grant of the patent:
14.06.2017 Bulletin 2017/24

(51) Int Cl.:
C08J 5/04 (2006.01)          B29C 43/34 (2006.01)
B29C 70/10 (2006.01)         B29K 105/12 (2006.01)

(21) Application number: 11859996.8

(22) Date of filing: 31.08.2011

(86) International application number:
PCT/JP2011/070313

(87) International publication number:
WO 2012/117593 (07.09.2012 Gazette 2012/36)

(54) **MOLDED BODY COMPRISING FIBER-REINFORCING COMPOSITE MATERIAL**

FORMKÖRPER MIT FASERVERSTÄRKUNGSVERBUNDSTOFF

CORPS MOULÉ COMPRENANT UN MATÉRIAU COMPOSITE DE RENFORCEMENT EN FIBRES

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.02.2011 JP 2011041684

(43) Date of publication of application:
08.01.2014 Bulletin 2014/02

(73) Proprietor: Teijin Limited
Osaka-shi, Osaka 541-0054 (JP)

(72) Inventors:
• YAGI, Yutaka
Gotemba-shi, Shizuoka 412-0048 (JP)
• SUGIYAMA, Toru
Ehime 791-8044 (JP)
• KONDO, Yutaka
Ehime 791-8044 (JP)
• TANIGUCHI, Michiharu
Ehime 791-8044 (JP)
• KONAGAI, Yuhei
Ehime 791-8044 (JP)
• FURUKAWA, Ikkou
Ehime 791-8044 (JP)

(74) Representative: Hallybone, Huw George
Carpmaels & Ransford LLP
One Southampton Row
London WC1B 5HA (GB)

(56) References cited:
EP-A1- 0 483 716          EP-A1- 2 671 991
JP-A- 2006 291 377        JP-A- 2008 254 191
JP-A- 2008 308 543        JP-A- 2011 178 890
JP-A- 2011 178 891        US-A- 5 194 462

• S.T. Jespersen ET AL: "Consolidation of net-shape random fiber thermoplastic composite preforms", POLYMER COMPOSITES, vol. 31, no. 4, 1 January 2009 (2009-01-01), pages 653-665, XP055190822, US ISSN: 0272-8397, DOI: 10.1002/pc.20844

• JESPERSEN S T ET AL: "Flow Properties of Tailored Net-Shape Thermoplastic Composite Preforms", APPLIED COMPOSITE MATERIALS, KLUWER ACADEMIC PUBLISHERS, DO, vol. 16, no. 6, 16 September 2009 (2009-09-16), pages 331-344, XP019745580, ISSN: 1573-4897, DOI: 10.1007/S10443-009-9103-9

## Description

Technical Field

The present invention relates to a lightweight shaped product having degree of freedom in shape, constituted by a fiber-reinforced composite material containing reinforcing fibers and a thermoplastic resin. The invention further relates to a shaped product usable in housings for electric and electronic equipments, parts for automobiles, parts for medical equipments, parts for aircrafts, building materials and parts for general industries. The invention further relates to a method for manufacturing the shaped product in high productivity.

Background Art

In recent years, demand relating to weight lightening is increased in various fields such as electric and electronic equipments, automobiles, medical equipments, aircrafts, building materials and parts for general industries, and housing and members utilized therein have been required to lighten weight and have high rigidity. A shaped product obtained by pressing a rolled plate of an aluminum alloy or a magnesium alloy, or a shaped product obtained by die-casting the same is used as such thin-walled and high rigidity housings and members. Furthermore, a shaped product obtained by injection-molding a fiber-reinforced composite material in which glass fibers or carbon fibers is filled therein, and a shape product obtained by integrating a fiber-reinforced composite material plate and a thermoplastic resin by injection molding have been used.

The aluminum alloy and magnesium alloy are excellent in strength and rigidity, but have a limit in, formability, and are therefore difficult to form a complicated shape in a single substance. Furthermore, a metal member (particularly a magnesium alloy) has a problem that corrosion resistance is poor. The surface of the metal member corrodes by moisture in the air or moisture and salt contained in sweat of a user, leading to occurrence of poor appearance. In view of this, Patent Document 1 proposes a method for producing a housing including a application step for applying the entire member constituted by a magnesium alloy with a resin layer and a molding step for integrally molding the member and a resin-made part. This method enables to form a complicated shape and to impart corrosion resistance. However, the steps become complicated, and additionally, specific strength of an aluminum alloy, a magnesium alloy and a resin is high relative to an iron, but is low as compared with a fiber-reinforced composite material described hereinafter. Therefore, there is a limit in achievable weight lightening.

The fiber-reinforced composite material is excellent in specific strength and specific rigidity and furthermore excellent in corrosion resistance, and is therefore widely utilized in the above-described uses. Particularly, a shaped product obtained by injection molding a fiber-reinforced composite material in which glass fibers or carbon fibers is filled therein is widely used because of high degree of freedom in shape and high productivity. However, because length of fibers remained in the shaped product is short, the problem still remains in the uses requiring high strength and rigidity. On the other hand, a fiber-reinforced composite material reinforced by a continuous fiber is particularly excellent in specific strength and specific rigidity, and therefore has been mainly used in the uses requiring high strength and rigidity. However, the fiber-reinforced composite material has low degree of freedom in shape as compared with a resin and a fiber-reinforced composite material obtained by injection molding, and a complicated shape has been difficult to be formed by a single substance. Furthermore, because the fiber-reinforced composite material is produced by layering a plurality of reinforcing fibers in a woven form, there has been a problem that productivity is low. Patent Document 2 proposes a combined shaped product in which a resin member is jointed to a plate-like member constituted by a sheet containing reinforcing fibers, particularly a continuous fiber, at an outer edge of the plate-like member. This constitution enables to achieve a shaped product having a complicated shape. However, because the shaped product is produced through a plurality of steps, it is difficult to say that productivity is high. Furthermore, a fiber-reinforced composite material using a continuous fiber is generally obtained by heating and pressuring a material called a prepreg in which a base material of reinforcing fiber is previously impregnated with a thermosetting resin, for 2 hours or more by using an autoclave. In recent years, RTM molding method including setting a base material of reinforcing fiber in which a resin is not impregnated in a mold and then pouring a thermosetting resin in the mold is proposed, and a molding time has been greatly shortened. However, even in the case of using the RTM molding method, the time of 10 minutes or more is required to mold one part, and productivity is not improved.

For this reason, a fiber-reinforced composite material using a thermoplastic resin as a matrix has been focused in place of the conventional thermosetting resin. However, the thermoplastic resin generally has high viscosity as compared with a thermosetting resin. Therefore, there has been a problem that the time for impregnating a fiber base material with a resin is long, and as a result, takt time up to the molding becomes long.

A technique called thermoplastic stamping molding (TP-SMC) has been proposed as a technique to solve those problems. This technique is a molding method including heating chopped fibers previously impregnated with a thermoplastic resin to a melting point or a flowable temperature of the resin, or higher, introducing the chopped fibers in a part of a mold, immediately closing the mold, and fluidizing the fibers and the resin in the mold, thereby obtaining a product shape, followed by cooling to form a shaped product. This technique enables the molding in a short period of time of about 1 minute by using fibers previously impregnated with a resin. Patent Documents 3 and 4 describe a method for producing chopped fiber bundles and molding materials. Those methods are methods using molding materials as called SMC or a stampable sheet. In such thermoplastic stamping molding, the fibers and the resin are allowed to flow in the mold, so that there have been problems of failing to produce a thin-walled one, and fiber orientation is disturbed, making it difficult to control.

Patent Document 1: JP-A-2010-147376
Patent Document 2: JP-A-2010-131804
Patent Document 3: JP-A-2009-114611
Patent Document 4: JP-A-2009-114612

Document EP 0 483 716 A1 discloses a method of producing a fiber-reinforced thermoplastic resin molding material.

Disclosure of the Invention

Problems that the Invention is to Solve

The problem to be solved in the present invention is to provide a shaped product in high productivity, the shaped product being thin-walled and lightweight, having high rigidity and excellent surface appearance, and having a complicated three-dimensional shape.

Means for Solving the Problems

As a result of intensive investigations to solve the above problems, the present inventors have reached the present invention. That is, the present invention relates to a shaped product according to claim 1.

Advantage of the invention

According to the present invention, a shaped product being thin-walled and lightweight, having high rigidity and excellent surface appearance, and having a complicated three-dimensional shape can be produced by a simple process in high productivity. Even a shaped product having a complicated three-dimensional shape can be obtained by integral molding in the present invention. Housings for electric and electronic equipments can be provided by the present invention.

Brief Description of the Drawings

Fig. 1 is a perspective view of a first embodiment of the present invention.
Fig. 2 is a perspective view of a second embodiment of the present invention.

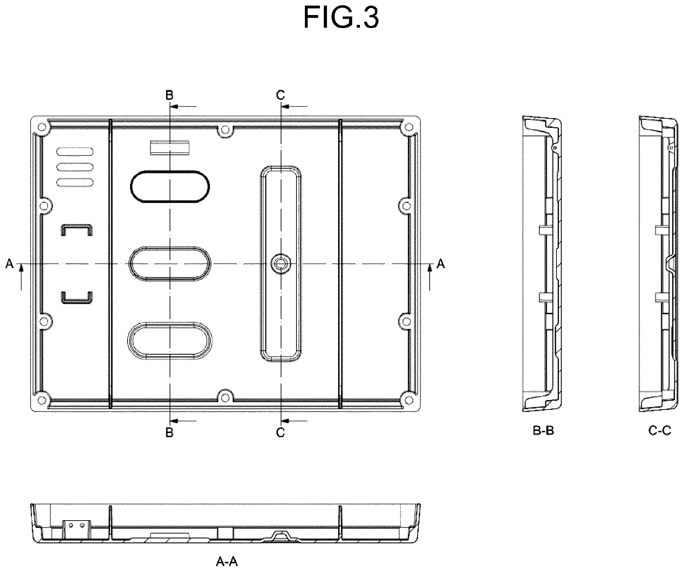

Fig. 3 is a three-view drawing (cross-sectional view) of the second embodiment of the present invention.

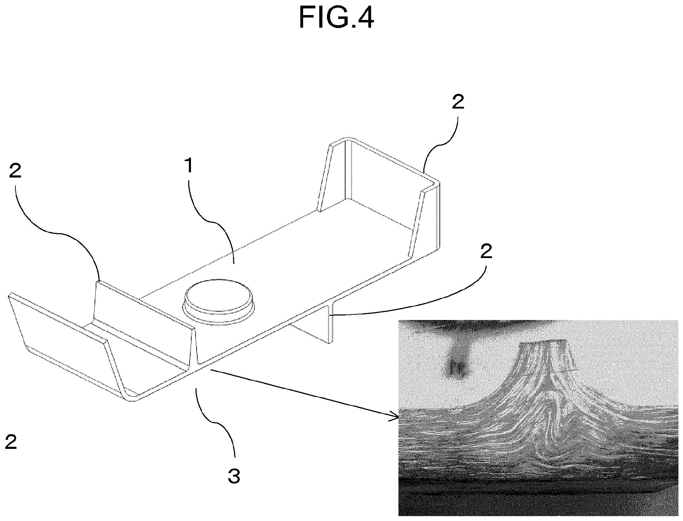

Fig. 4 is a junction of a horizontal portion and an upright portion in the first embodiment of the present invention.
Fig. 5 is a cross-sectional observation photograph of a layer structure of the junction of a horizontal portion and an upright portion in the first embodiment of the present invention.

Mode for Carrying out the Invention

The present invention relates to a shaped product constituted by a fiber-reinforced composite material constituted by a thermoplastic resin and discontinuous reinforcing fiber contained therein. Embodiments of the shaped product of the present invention are described below, but the invention is not limited to those embodiments.

[Reinforcing fiber]

The reinforcing fiber in the fiber-reinforced composite material constituting a shaped product is not particularly limited. At least one selected from the group consisting of a carbon fiber, an aramide fiber, a polyester fiber and a glass fiber is preferably used. In the uses requiring strength and rigidity, a carbon fiber, a glass fiber and an aramide fiber are preferably used, and a carbon fiber is more preferably used. In the uses requiring conductivity, a carbon fiber is preferably used, and a carbon fiber coated with a metal such as nickel is more preferably used. In the uses requiring electromagnetic wave transmission, an aramide fiber, a glass fiber and a polyester fiber are preferably used, and an aramide fiber and a glass fiber are more preferably used in terms of a balance between electromagnetic wave transmission and strength. In the uses requiring impact resistance, an aramide fiber and a polyester fiber are preferably used. Those fibers can be used in combination, kinds of reinforcing fibers can be selected depending on the portion of the shaped product, and a shaped product can be molded in a state where different reinforcing fibers are stacked.

[Thermoplastic resin]

The amount of the thermoplastic resin present in the fiber-reinforced composite material constituting the shaped product of the present invention is preferably from 50 to 1,000 parts by weight per 100 parts by weight of the reinforcing fibers. The amount of the thermoplastic resin is more preferably from 55 to 500 parts by weight per 100 parts by weight of the reinforcing fibers, and still more preferably from 60 to 300 parts by weight per 100 parts by weight of the reinforcing fibers.

The thermoplastic resin constituting the shaped product is not particularly limited. At least one selected from the group consisting of a vinyl chloride resin, a vinylidene chloride resin, a vinyl acetate resin, a polyvinyl alcohol resin, a polystyrene resin, an acrylonitrile-styrene resin (AS resin), an acrylonitrile-butadiene-styrene resin (ABS resin), an acrylic resin, a methacrylic resin, a polyethylene resin, a polypropylene resin, a polyamide 6 resin, a polyamide 11 resin, a polyamide 12 resin, a polyamide 46 resin, a polyamide 66 resin, a polyamide 610 resin, a polyacetal resin, a polycarbonate resin, a polyethylene terephthalate resin, a polyethylene naphthalate resin, a polybutylene terephthalate resin, a polybutylene naphthalate resin, a polyarylate resin, a polyphenylene ether resin, a polyphenylene sulfide resin, a polysulfone resin, polyether sulfone resin, a polyether etherether ketone resin, a polylactic resin, and a mixture (resin composition) of two kinds or more selected from those resins is preferred. At least one selected from the group consisting of a composition of a polycarbonate resin and a polyester resin, a composition of a polycarbonate and an ABS resin, a composition of a polyphenylene ether resin and a polyamide resin, a composition of a polyamide resin and an ABS resin, and a composition of a polyester resin and a nylon resin is more preferred as the resin composition.

Functional fillers and additives may be contained in the fiber-reinforced composite material in an amount that the object of the present invention is not impaired. Examples thereof include organic/inorganic fillers, a flame retardant, a UV-resistant agent, a pigment, a mold release agent, a softener, a plasticizer and a surfactant, but not limitative. Particularly, high flame retardancy is sometime required in electronic and electric equipment uses and automobile uses. Therefore, a flame retardant is preferably contained in a thermoplastic resin. The conventional flame retardants can be used as the flame retardant in the present invention, and the flame retardant used is not particularly limited so long as it can impart flame retardancy to the thermoplastic composition of the present invention. Specific examples of the flame retardant include a phosphorus flame retardant, a nitrogen flame retardant, a silicone compound, an organic alkali metal salt, an organic alkali earth metal salt and a bromine flame retardant. Those flame retardants may be used alone or in combination of two or more thereof. The content of the flame retardant is preferably from 1 to 40 parts by mass, and more preferably from 1 to 20 parts by mass, per 100 parts by mass of the resin in terms of a balance of physical properties, formability and flame retardancy.

[Reinforcing fiber contained in shaped product]

The reinforcing fibers contained in the shaped product of the present invention are characterized in that the ratio of reinforcing fiber bundles (A) constituted by the reinforcing fibers of the critical single fiber number or more defined by the formula (1):

$$\text{critical single fiber number} = 600/D \qquad (1)$$

wherein D is an average fiber diameter ($\mu$m) of a single reinforcing fiber,
to the total amount of the reinforcing fibers in the shaped product is 20 vol% or more and is less than 90 vol%. In the shaped product, single fibers or fiber bundles each constituted by the reinforcing fibers less than the critical single fiber number is present as reinforcing fibers other than the reinforcing fiber bundle (A).

That is, the shaped product of the present invention is characterized in that the amount of the reinforcing fiber bundles each constituted by the reinforcing fibers of the critical single fiber number or more defined by depending on an average fiber diameter is 20 vol% or more and is less than 90 vol%, in other words, the reinforcing fiber bundle constituted by specific number or more of the single reinforcing fibers obtained by controlling the degree of opening, and other reinforcing fibers opened than the reinforcing fiber bundles are contained in a specific ratio.

Where the ratio of the reinforcing fiber bundles (A) to the total amount of the reinforcing fibers is less than 20 vol%, there is an advantage that a shaped product having excellent surface appearance is obtained, but a shaped product having excellent mechanical properties is difficult to be obtained. Where the ratio of the reinforcing fiber bundles (A) is 90 vol% or more, a thickness of entangled portions of the fibers is locally thick, and a shaped product being thin-walled can not be obtained. The ratio of the reinforcing fiber bundle is more preferably 30 vol% or more and less than 80 vol%.

The shaped product is further characterized in that the average number (N) of the reinforcing fibers in the reinforcing fiber bundles (A) each constituted by the reinforcing fibers of the critical single fiber number or more satisfies the following formula (2):

$$0.7 \times 10^4/D^2 < N < 1 \times 10^5/D^2 \qquad (2)$$

wherein D is an average fiber diameter ($\mu$m) of the reinforcing fibers.

Above all, the average number (N) of the reinforcing fibers in the reinforcing fiber bundles (A) each constituted by the reinforcing fibers of the critical single fiber number or more is less than $6 \times 104/D^2$.

Specifically, in the case that the reinforcing fibers in the shaped product are carbon fibers and an average fiber diameter of the carbon fibers is from 5 to 7 $\mu$m, the critical single fiber number is from 86 to 120, and in the case that the average fiber diameter of the carbon fibers is 5 $\mu$m, the average number of fibers in the fiber bundle is more than 280 and less than 4,000. Above all, the average number of fibers is preferably from 600 to 2,500, and more preferably from 600 to 1,600. In the case that the average fiber diameter of the carbon fibers is 7 $\mu$m, the average number of fibers in the fiber bundle is more than 142 and is less than 2,040. Above all, the average number of fibers is preferably from 300 to 1,500, and more preferably from 300 to 800.

In the case that the average number (N) of fibers in the reinforcing fiber bundles (A) is less than $0.7 \times 10^4/D^2$, it becomes difficult to obtain a shaped product having high fiber volume fraction (Vf). In the case that the average number (N) of fibers in the reinforcing fiber bundles (A) is $1 \times 10^5/D^2$ or more, thick portions may be locally formed in the shaped product, which is liable to cause voids. When a thin-walled shaped product of 1 mm or less is intended to be obtained, use of fibers simply separated results in a large unevenness in fiber areal weight to fail to obtain good physical properties. Also, when all fibers are opened, it may be easy to obtain a thinner shaped product, but the entanglement of fibers is increased, and a shaped product having high fiber volume fraction is not obtained. A thin-walled shaped product having high development rate of physical properties can be achieved by containing the reinforcing fiber bundles (A) each constituted by the reinforcing fiber of the critical single fiber number or more defined by the formula (1) and reinforcing fibers (B) in a state of individual single fibers or constituted by the reinforcing fibers less than the critical single fiber number in the shaped product. The shaped product of the present invention can have various thicknesses, and a thin-walled shaped product having a thickness of from about 0.2 to 1 mm can be preferably obtained.

The shaped product is manufactured by press-molding a random mat constituted by reinforcing fibers and a thermoplastic resin. The opening state of the reinforcing fibers in the shaped product substantially maintains the state in the random mat. The reinforcing fibers contained in the shaped product may be suitably adjusted by controlling the ratio of the reinforcing fiber bundles (A) in the random mat and the average number (N) of the reinforcing fibers in the reinforcing fiber bundles (A) in the random mat, in order that the ratio of the reinforcing fiber bundles (A) in the shaped product and the average number (N) of the reinforcing fibers in the reinforcing fiber bundles (A) in the shaped product. A preferable method for controlling the ratio of the reinforcing fiber bundles (A) and the average number of reinforcing fibers therein, in the reinforcing fibers in the random mat is described hereinafter.

The reinforcing fibers contained in the shaped product of the present invention are discontinuous fibers. The average fiber length of the fibers contained in the shaped product is from 5 to 100 mm. A shaped product constituted by a fiber-reinforced composite material containing reinforcing fibers having a certain degree of fiber length can be provided by a preferable method for manufacturing the shaped product of the present invention described hereinafter. The shaped product develops not only static strength and rigidity, but high physical properties to impact load and fatigue load over a long period of time. Additionally, even in the case of molding a shaped product having a complicated shape, orientation of reinforcing fibers is difficult to be disturbed, the reinforcing fibers two-dimensionally orient in a plane, and it becomes possible to maintain isotropy. The average fiber length of the reinforcing fibers is preferably from 10 to 100 mm, more preferably from 15 to 100 mm, still more preferably from 15 to 80 mm, and further preferably from 20 to 60 mm.

The shaped product of the present invention includes the case where a portion of a shaped product is reinforced with a unidirectional material or the like. In the case of having a reinforcing layer comprising a unidirectional material layer in addition to a fiber-reinforced composite material (major portion) constituted by a thermoplastic resin and discontinuous reinforcing fibers contained therein, the above definition of the reinforcing fibers contained in the shaped product relates to the major portion, excluding the reinforcing layer made of a unidirectional material, and the like.

[Shaped product]

The shaped product has a horizontal portion and an upright portion extending in a longitudinal direction to the horizontal direction. The upright portion may not have strictly a right angle so long as the upright portion extends a longitudinal direction to the horizontal portion, and can have an angle for securing an optional angle or a draft angle of a mold to such an extent that the intention of the present invention is not impaired. In this case, the angle between the horizontal portion and the upright portion is preferably from 30 to 90°, and more preferably from 40 to 85°. Optional chamfering and curvature can be added between the horizontal portion and the upright portion to such an extent that the intention of the present invention is not impaired. A size of the chamfering and the curvature is not particularly limited. In the case of the chamfering, C 0.2 to 10 mm is preferably used, and in the case of the curvature, R 0.2 to 10 mm is preferably used.

In the case that the use of the shaped product has an outer plate function of a product, such as a housing or a panel-shaped member, a plurality of upright portions are preferably present at the same surface side of the horizontal portion.

[Horizontal portion]

In the shaped product of the present invention, the horizontal portion means a portion that has substantially a planar surface and constitutes a base of the upright portion, and one example thereof includes a ceiling or a bottom wall of a housing or a panel-shaped member. The horizontal portion is not necessary to have a completely planar surface, and may partially have unevenness or bead. Height and width of unevenness and bead are not particularly limited. The height is desirably from 0.5 to 10 times the thickness of the horizontal portion constituting the base. The horizontal portion may have through-holes for ventilation, bolt fastening, wiring and the like. In this case, holes may be formed in a mold using a shearing machine or the like simultaneous with the molding of the shaped product, and may be formed by drilling, punching, cutting or the like as a post-processing. The thickness of the horizontal portion is not particularly limited. The thickness is preferably from 0.2 to 5 mm, and more preferably from 1 to 3 mm. The thickness of the horizontal portion is not necessary to be uniform, and can be partially increased or decreased. In this case, the range of increase and decrease of the thickness is not particularly limited. The range is preferably from 30 to 300%, and more preferably from 50 to 200%, with respect to the thickness of the horizontal portion constituting the base. The thickness can be changed stepwise, and can be continuously changed with a taper or a curvature. The thickness is preferably changed continuously from the standpoint of avoiding stress concentration.

[Upright portion]

In the shaped product of the present invention, the upright portion means a portion extending in a longitudinal direction at the same side to the horizontal direction, and examples thereof include a side wall, a rib, a boss, a mount and a hinge of a housing or a panel-shaped member. The height of the upright portion is not particularly limited. The height is preferably from 1 to 300 mm, and more preferably from 5 to 100 mm. The height of the upright portion is not necessary to be uniform, and can be locally increased or decreased. The range of increase and decrease of the height of the upright portion is not particularly limited, and is preferably from 10 to 90%, and more preferably from 20 to 80%, with respect to the maximum height. The thickness of the upright portion is not particularly limited. The thickness may be the same as or different from that of the horizontal portion. Since the upright portion is required to have further complicated shape in many cases as compared with the horizontal portion, the thickness of the upright portion is preferably from 0.2 to 100 mm, and more preferably from 1 to 50 mm. The thickness of the upright portion is not necessary to be uniform, and can be locally increased or decreased. In this case, the range of increase and decrease of the thickness is not particularly limited. The range is preferably from 20 to 500%, and more preferably from 50 to 200%, with respect to a standerd thickness of the upright portion. The thickness can be changed stepwise, and can be continuously changed with a taper or a curvature. The thickness is preferably changed continuously from the standpoint of avoiding stress concentration. The upright portion preferably has an angle for securing a draft angle of a mold to such an extent that the intention of the present invention is not impaired. The draft angle of a mold is preferably from 1 to 45°, and more preferably from 5 to 10°. In the case that the upright portion is a boss or a mount, a metal part such as a helisert or a nutsert can be insert-molded in the inside thereof. The upright portion may have partial unevenness and bead. In this case, it should be noted that a draft angle of a mold can be secured. The upright portion may has a through-hole for ventilation, bolt fastening, wiring and the like, may form holes using a shearing machine, and may form holes by drilling, punching, cutting or the like as post-processing.

[Layer constitution of shaped product]

The horizontal portion and the upright portion have a layer (X) in which the reinforcing fibers are isotropic in a plane and are two-dimensionally oriented, in order to obtain a shaped product being thin-walled and lightweight, having high rigidity and having excellent appearance, which is the object of the present invention. The term "are isotropic in a plane and are two-dimensionally oriented" in the present invention means that the reinforcing fibers constituting the fiber-reinforced composite material have a main orientation direction of a fiber axis in a tangent surface of the fiber-reinforced composite material, and a ratio obtained by dividing larger value by smaller value among values of tensile modulus measured in two directions at right angles to each other in its plane does not exceed 2. The fact that the main orientation direction of the fiber axis is present in a tangent surface of the fiber-reinforced composite material can be confirmed by that the reinforcing fibers in the fiber-reinforced composite material are arranged in a layer form when observing a cross-section of the fiber-reinforced composite material.

It is preferred that a junction between the horizontal portion and the upright portion has at least two kinds selected from the group consisting of a layer (X) in which the reinforcing fibers are isotropic in a plane and are two-dimensionally oriented, a layer (Y) in which the reinforcing fibers are continuously oriented in the horizontal portion and the upright portion, and a layer (Z) in which the reinforcing fibers are not two-dimensionally oriented in a plane and are not continuously oriented in the horizontal portion and the upright portion. The ratio of the respective layers is not particularly limited. In the case of a thin-walled product having a simple shape, the ratios of (X) and (Y) are increased, and the ratio of (Z) is decreased. In the case of a thick product having complicated shape, the ratios of (X) and (Y) are decreased, and the ratio of (Z) is increased. In the case of the former, the ratios of (X) and (Y) in the thickness of the horizontal portion are preferably from 1 to 45%, respectively. In the case of the latter, the ratios of (X) and (Y) in the thickness of the horizontal portion are preferably from 1 to 30%. This can secure strength of the junction between the horizontal portion and the upright portion. In addition, lightweight and high rigidity in thin-walled portions are achieved, and fiber flow capable of forming a three-dimensional complicated shape are achieved while minimally securing the layer (X) that is isotropic in a plane and reinforcing fiber are three-dimensionally oriented, in portions having large thickness. To achieve the ratios of the layers (X), (Y) and (Z) in the inside of the shaped product, it is important that the reinforcing fibers contained in the shaped product includes the reinforcing fiber bundles (A) each constituted by the reinforcing fiber of the critical single fiber number or more defined by the following formula (1), the ratio thereof to the total amount of the reinforcing fibers in the shaped product is 20 vol% or more and less than 90 vol%, and the average number (N) of the reinforcing fibers in the reinforcing fiber bundles (A) satisfies the following formula (2). Furthermore, the average fiber length is from 5 to 100 mm in order to secure a layer in which the reinforcing fibers are isotropic in a plane and are two-dimensionally oriented even in a shaped product having a complicated shape.

$$\text{Critical single fiber number} = 600/D \qquad (1)$$

$$0.7\times10^4/D^2 < N < 1\times10^5/D^2 \qquad (2)$$

wherein D is an average fiber diameter ($\mu$m) of the reinforcing fibers.

In the shaped product in which a plurality of the upright portions are present at the same plane side to the horizontal portions as described before, it is preferred that the layer (X) in which the reinforcing fibers are isotropic in a plane and are two-dimensionally oriented is continuously present on a plane of the horizontal portion facing the upright portions. By this constitution, not only a shaped product being thin-walled and lightweight, and having high rigidity is obtained, but surface appearance of a part corresponding to an outer plate of a product can be enhanced. This layer constitution can be further preferably achieved by controlling molding conditions in press molding described hereinafter.

To enhance surface appearance of a shaped product, it is possible to adhere a decorative film to an outer surface side of the horizontal portion and/or the upright portions. Examples of the decorative film include a transfer foil having a desired decorative pattern such as characters, graphic or pattern formed thereon, a painted label and a painted film. A method of transferring a decorative pattern of the decorative film to a surface of a shaped product or adhering or fusing the decorative film itself is generally known. In this case, a layer for embedding surface unevenness of a shaped product may be formed between the decorative film and the shaped product. The decorative film may be adhered as a post-processing, and can be previously set in a mold for pressing and integrally molded with a fiber-reinforced composite material.

In the case that large load acts to the shaped product, it is possible to reinforce a part of the horizontal portion and/or the upright portion with a unidirectional material. In this case, it is preferred that the unidirectional material is arranged on an outer surface of the shaped product, and it is further preferred from the standpoint of suppression of warpage during molding that the unidirectional materials are arranged on both front and back surface of the shaped product to form a sandwich structure. The thickness of the unidirectional material is not particularly limited. The thickness is preferably from 5 to 100%, and more preferably from 10 to 50%, with respect to the thickness of the fiber-reinforced composite material formed from a random mat. The limitations of the reinforcing fiber bundle and the average fiber length of the reinforcing fibers contained in the shaped product are limitations on major portions of the shaped product excluding portions such as the unidirectional material.

The unidirectional material means a material that continuous reinforcing fibers having a length of 100 mm or more are aligned in one direction in a thermoplastic resin. The kind of the thermoplastic resin may be the same as or differ from the thermoplastic resin contained in the fiber-reinforced composite material. The unidirectional material used in the present invention may be a material obtained by stacking a plurality of continuous reinforcing fibers, and may be a multi-axial woven fabric in which a material (multi-axial woven fabric base material) obtained by forming a bundle of continuous reinforcing fibers into a sheet shape and stacking the sheets with the change of an angle is stitched with a stitching yarn such as a nylon yarn, a polyester yarn or a glass fiber yarn by passing the stitching yarn through the stacked body in a thickness direction and reciprocating between a front side and a rear side of the stacked body along the surface direction. In the unidirectional material, the amount of the thermoplastic resin is preferably from 50 to 1,000 parts by weight per 100 parts by weight of the reinforcing fibers. The amount of the thermoplastic resin is more preferably from 55 to 500 parts by weight, and still more preferably from 60 to 300 parts by weight, per 100 parts by weight of the reinforcing fibers.

[Random mat]

The shaped product is obtained by press-molding a random mat constituted by reinforcing fibers and a thermoplastic resin. The random mat for obtaining the shaped product is constituted by reinforcing fibers having a fiber length of from 5 to 100 mm and a thermoplastic rein, and a fiber areal weight of the reinforcing fibers is from 25 to 3,000 $g/m^2$, the ratio of reinforcing fiber bundles (A) each constituted by single reinforcing fibers of the critical single fiber number or more defined by the following formula (1) to the total amount of the reinforcing fibers in the mat is 20 vol% or more and less than 90 vol%, and an average number (N) of the reinforcing fibers in the reinforcing fiber bundle (A) satisfies the following formula (2):

$$\text{critical single fiber number} = 600/D \qquad (1)$$

$$0.7 \times 10^4/D^2 < N < 1 \times 10^5/D^2 \qquad (2)$$

wherein D is an average fiber diameter ($\mu$m) of the reinforcing fibers.

In a plane of the random mat, the reinforcing fibers are not oriented in a specific direction, and are spread and arranged in random directions. The random mat is an in-plane isotropic material. In the case that a shaped product is obtained from the random mat, the isotropy of the reinforcing fibers in the random mat is also maintained even in the shaped product. Isotropy of the random mat and the shaped product obtained therefrom can be qualitatively evaluated by obtaining the shaped product from the random mat and determining a ratio of tensile modulus in two directions at right angles to each other. As to values of tensile modulus in two directions in the shaped product obtained, when a ratio obtained by dividing larger value by smaller value does not exceed 2, it is evaluated as being isotropic. When the ratio does not exceed 1.3, it is evaluated as being excellent in isotropy.

The fiber areal weight of the reinforcing fibers in the random mat is within a range of from 25 to 3,000 $g/m^2$. The random mat is useful as a prepreg, and various fiber areal weight can be selected in conformity with the desired molding.

The reinforcing fibers in the random mat are discontinuous, and an average fiber length thereof is from 5 to 100 mm. The shaped product of the present invention is characterized in that reinforcing fibers having large length to an extent are contained, and reinforcement function can be developed. The fiber length is represented by an average fiber length determined by measuring fiber length of the reinforcing fibers in the random mat obtained. A method for measuring an average fiber length include a method in which fiber lengths of 100 fibers arbitrarily extracted are measured up to 1 mm unit using vernier calipers, and its average is obtained.

The average fiber length of the reinforcing fibers in the random mat is preferably from 10 to 100 mm, preferably from 15 to 100 mm, more preferably from 15 to 80 mm, and still more preferably 20 to 60 mm. In a preferable method for cutting reinforcing fibers described hereinafter, in the case of producing a random mat by cutting the reinforcing fibers into a fixed length, the average fiber length approximately equals to the length of the fibers cut.

In the random mat, the ratio of the reinforcing fiber bundles (A) each constituted by the reinforcing fibers of the critical single fiber number or more represented by the formula (1):

$$\text{critical single fiber number} = 600/D \qquad (1)$$

wherein D is an average fiber diameter ($\mu$m) of the reinforcing fibers,
to the total amount of the reinforcing fibers of the random mat is 20 vol% or more and less than 90 vol%. In the random mat, single fibers or fiber bundles constituted by the reinforcing fiber less than the critical single fiber number is present as reinforcing fibers other than the reinforcing fiber bundles (A) in the random mat.

The random mat contains the reinforcing fiber bundle in which the amount of the reinforcing fiber bundles constituted by the single reinforcing fiber of the critical single fiber number or more defined depending on the average fiber diameter is 20 vol% or more and less than 90 vol%, that is, the degree of opening of the reinforcing fibers is controlled and the bundle is constituted by a specific number or more of the reinforcing fibers, and opened reinforcing fibers other than the reinforcing fiber bundle, in a specific ratio.

Where the ratio of the reinforcing fiber bundles (A) to the total amount of the reinforcing fibers is less than 20 vol%, there is an advantage that a composite material having excellent surface appearance is obtained when molding a random mat, but a fiber-reinforced composite material having excellent mechanical properties is difficult to be obtained. Where the ratio of the reinforcing fiber bundles (A) is 90 vol% or more, the thickness of entangled part of the reinforcing fibers is locally increased, and a thin-walled product is not obtained. The ratio of the reinforcing fiber bundles (A) is more preferably 30 vol% or more and is less than 80 vol%. The amount of the reinforcing fiber bundle of from 20 to less than 90 vol% can be achieved by, controlling, for example, a pressure of air blown in an opening step. Furthermore, the ratio can be controlled by adjusting a size of a fiber bundle to be subjected to a cutting step, for example, by adjusting a width of a bundle and the number of single fibers per width. Specifically, a method in which a width of a fiber bundle is widened by extending or the like and the fiber bundle is subjected to a cutting step, and a method in which a separating step is provided before the cutting step, are exemplified. Furthermore, a method in which a fiber bundle is cut using a so-called separating knife in which many short blades are arranged, and a method of separating simultaneously with cutting, are exemplified. The preferred conditions are described in the item of an opening step.

The average number (N) of fibers in the reinforcing fiber bundles (A) each constituted by the reinforcing fiber of the critical single fiber number or more satisfies the following formula (4):

$$0.7 \times 10^4/D^2 < N < 1 \times 10^5/D^2 \qquad (4)$$

wherein D is an average fiber diameter ($\mu$m) of the reinforcing fibers.

To achieve that the average number (N) of fibers in the reinforcing fiber bundles (A) is within the above range, the average number (N) of fibers can be controlled by adjusting a size of a fiber bundle to be subjected to a cutting step, for example, width of the bundle and the number of single fibers per width, in the preferable production method described hereinafter. Specifically, a method in which a width of a fiber bundle is widened by extending or the like and the bundle is subjected to a cutting step, and a method in which a separating step is provided before a cutting step, are exemplified. Furthermore, the fiber bundle may be separated simultaneously with cutting.

Degree of spreading of the fiber bundle cut by, for example, a pressure of air blown in the opening step may be adjusted to control the average number (N) of the single reinforcing fibers in the reinforcing fiber bundles (A). The preferable conditions are described in the items of the fiber opening step and the cutting step.

Specifically, in the case that an average fiber diameter of carbon fibers constituting the random mat is from 5 to 7 $\mu$m, the critical single fiber number is from 86 to 120, and in the case that an average fiber diameter of carbon fibers is 5 $\mu$m, the average number of fibers in the fiber bundle is within a range of more than 280 to less than 4,000. Above all, the average number of fibers is preferably 600 to 2,500, and more preferably from 600 to 1,600. In the case that the average fiber diameter of the carbon fibers is 7 $\mu$m, the average number of fibers in the fiber bundle is within a range of from more than 142 to less than 2,040. Above all, the average number of fibers is preferably from 300 to 1,500, and more preferably from 300 to 800.

In the case that the average number (N) of fibers in the reinforcing fiber bundles (A) is $0.7 \times 10^4/D^2$ or less, there is a case to be difficult to obtain a composite material having high fiber volume fraction (Vf). Furthermore, in the case that the average number (N) of fibers in the reinforcing fiber bundles (A) is $1 \times 10^5/D^2$ or more, a portion having large thickness may be locally formed, which is liable to cause voids. In the case where a thin-walled composite material having thickness of 1 mm or less is intended to be obtained, use of fibers only simply separated results in a large unevenness in fiber areal weight to fail to obtain good physical properties. Furthermore, in the case that all of fibers are opened, it may be easy to obtain a thinner one, but entanglement of fibers are increased to fail to obtain one having a high fiber volume fraction. A thin random mat having high physical properties can be obtained by the random mat in which the reinforcing fiber bundles (A) each constituted by the single reinforcing fiber of the critical single fiber number or more defined by the formula (1) and the reinforcing fibers (B) in a state of individual single fibers or of less than the critical single fiber number are simultaneously present. The random mat of the present invention can have various thicknesses. Using this as a preform, a thin-walled shaped product having a thickness of from about 0.2 to 1 mm can be preferably obtained.

The random mat of the present invention contains a solid thermoplastic resin, and forms a preform for obtaining a fiber-reinforced composite material. It is preferred in the random mat that the thermoplastic resin is present in a fiber form and/or a particulate form. The random mat is characterized in that the reinforcing fibers and a fiber-form and/or particulate-form thermoplastic resin are present in a mixed state, and as a result, it is not necessary to fluidize the reinforcing fibers and the resin in a mold, and impregnation of the resin can be easily performed when molding. The thermoplastic resin is preferably constituted in a fiber form or a particulate form. The kind of the thermoplastic resin may be two kinds or more, and a fiber-form thermoplastic resin and a particulate-form thermoplastic resin may be used in combination.

In the case of the fiber form, a fineness is preferably from 100 to 5,000 dtex, and more preferably from 1,000 to 2,000 dtex, and an average length thereof is preferably from 0.5 to 50 mm, and more preferably from 1 to 10 mm.

In the case of particulate form, there is preferably exemplified a spherical form, a strip form or a cylindrical form such as a pellet. In the case of spherical form, there is preferably enumerated a body of revolution of a perfect circle or an ellipse, or a shape such as egg form. In the case of spherical form, the average particle size is preferably from 0.01 to 1,000 $\mu$m, more preferably from 0.1 to 900 $\mu$m and still more preferably from 1 to 800 $\mu$m. Although there is no particular limitation on particle size distribution, sharp distribution is more preferred for the purpose of obtaining a thinner shaped product. However, desired particle size distribution obtained by an operation such as classification can be used.

In the case of the strip form, a columnar form such as a pellet, a prismatic form or a scale shape is preferred. A strip form obtained by cutting a film into a narrow form is also preferred. In this case, the strip may have a certain degree of an aspect ratio, but the preferred length is the same degree as in the case of the fiber form.

[Method for producing random mat]

The random mat used in the present invention is preferably produced through the following steps 1 to 3:

1. a step of cutting reinforcing fibers;
2. a step of introducing reinforcing fibers cut in a tube and blowing air to the fibers to open a fiber bundle; and
3. a step of spreading the reinforcing fibers opened, simultaneously suctioning the fibers together with a fiber-form or particulate-form thermoplastic resin, applying the reinforcing fibers and the thermoplastic resin, and fixing the reinforcing fibers and the thermoplastic resin.

Each step is described in detail below.

[Cutting step]

The cutting method of the reinforcing fibers is specifically a cutting step for cutting reinforcing fibers using a knife. The knife is preferably a rotary cutter or the like.

To obtain a desired size of a fiber bundle, a bundle having a slightly narrow strand width is preferably used as a fiber bundle to be cut. Alternatively, it is preferred that the reinforcing fibers are cut in a longitudinal direction to decrease a strand width. In this case, it is preferred that the fiber bundle is cut into a specific fiber length and simultaneously the fiber bundle is slit in a longitudinal direction, using a cutter having a blade perpendicular to a fiber direction and a blade parallel to a fiber direction.

The rotary cutter used is preferably a spiral knife or a fiber separating knife, having a specified angle.

[Fiber opening step]

The fiber opening step is specifically a step of introducing the reinforcing fibers cut in a tube, blowing air to the fibers, and thereby opening a fiber bundle. The degree of opening can be appropriately controlled by pressure of air, and the like. It is preferred in the opening step that air is directly blown to the fiber bundle in a wind speed of from 1 to 1,000 m/sec, and more preferably from 5 to 500 m/sec from a compressed air blowing hole, and thereby the reinforcing fibers can be further completely opened. Specifically, a plurality of holes having a diameter of about 1 mm is formed in a tube passing the reinforcing fibers, a pressure of from about 0.2 to 0.8 MPa is applied from the outside, and compressed air is directly blown to the fiber bundle, and thereby the fiber bundle can be easily opened.

[Application step]

The application step is an application step of spreading the reinforcing fibers opened, simultaneously suctioning the fibers together with a fiber-form or particulate-form thermoplastic resin, and simultaneously spraying the reinforcing fibers and the thermoplastic resin. The reinforcing fibers opened and the fiber-form or particulate-form thermoplastic resin are preferably simultaneously applied to a sheet, specifically a breathable sheet provided at a lower part of a fiber opening apparatus.

In the application step, the amount of the thermoplastic resin supplied is preferably from 50 to 1,000 parts by weight per 100 parts by weight of the reinforcing fibers.

The reinforcing fibers and the fiber-form or particulate-form thermoplastic resin are preferably sprayed so as to be two-dimensionally oriented. The application method and the following fixing method are important to apply the fibers opened while two-dimensionally allowing to be oriented. The application method of the reinforcing fibers preferably uses a taper tube having a conical shape or the like. In a conical tube, air is diffused to decrease flow velocity in the tube, and rotational force is given to the reinforcing fibers. The reinforcing fibers opened in the taper tube can be preferably spread and sprayed by utilizing Venturi effect.

The reinforcing fibers and the thermoplastic resin are preferably sprayed on a movable breathable sheet having a suction mechanism for the following fixing step.

The reinforcing fibers and the thermoplastic resin are preferably sprayed in the random mat evenly.

[Fixing step]

The application and fixing steps may be performed simultaneously. The fixing step is a step for fixing the reinforcing fibers and thermoplastic resin, which are applied. The fibers are preferably fixed by air suction from a lower part of the breathable sheet. The thermoplastic resin sprayed together with the reinforcing fibers is fixed by air suction when the thermoplastic resin is a fiber form, and fixed with the reinforcing fibers even in a particulate form.

A highly two-dimensionally oriented mat can be obtained by conducting suction from a lower part through the breathable sheet. The particulate-form or fiber-form thermoplastic resin can be easily mixed with the reinforcing fibers by suctioning the thermoplastic resin using negative pressure generated and further by diffusion flux generated in the tube. The random mat obtained can be impregnated with the thermoplastic resin in a relatively short period of time because movement distance of the thermoplastic resin is short in the impregnation step, due to the thermoplastic resin being present in the vicinity of the reinforcing fibers. A breathable non-woven fabric having the same material as the matrix resin used is previously set to a fixing part, and the reinforcing fibers and particles may be sprayed to the non-woven fabric.

The application and fixing step are simultaneously conducted, that is, the fixing may be conducted while applying.

The preferable method for producing a random mat as described above can provide a random mat having two-dimensional orientation, in which the ratio of fibers having a long axis three-dimensionally oriented is small.

[Press molding]

The method for molding a shaped product of the present invention is not particularly limited. The method preferably includes arranging a random mat or a plate-shaped prepreg obtained by pressing a random mat, as a base material in a mold and press molding the base material.

Above all, the base material is arranged such that a charge rate of the following formula (5) is from 25 to 100%, and is press-molded.

$$\text{Charge rate} = 100 \times \text{base material area (mm}^2)/\text{mold cavity projected area (mm}^2) \qquad (5)$$

wherein the mold cavity projected area means a projected area in a draft direction.

In the case that high physical properties and surface appearance are required in the horizontal portion of the shaped product, the charge rate is preferably from 80 to 100%. Where the charge rate is less than 80%, the region that the layer (X) in which the reinforcing fibers are isotropic in a plane and are two-dimensionally oriented cannot be secured is increased in the horizontal portion, and development rate of physical properties and surface appearance tend to be decreased. Where the charge rate exceeds 100%, burr is generated at the edge of the shaped product, and trimming by machine processing or the like is necessary in a post-processing. Therefore, not only a process is complicated, but material loss is generated. When the charge rate is from 80 to 100%, a lightweight shaped product can be manufactured in high productivity while securing the layer (X) in which the reinforcing fibers are isotropic in a plane and are two-dimensionally oriented, in the horizontal portion without occurrence of material loss and troublesome trimming.

Specifically, the shaped product can be manufactured by passing through the following step 1), and then the following step 2) or 2'):

1) a thermoplastic rein in a random mat is melted under pressure, the thermoplastic resin is impregnated into a reinforcing fiber bundle and spaces among single fibers of the reinforcing fibers, followed by cooling, and a plate-shaped prepreg is obtained;

2) the plate-shaped prepreg is heated to a melting point or higher or a glass transition point or higher of the thermoplastic resin, the shape of the prepreg matches that of a shaped product to be obtained, and a single prepreg or a layered prepregs is introduced in a mold maintained at lower than a melting point or lower than a glass transition point of the thermoplastic resin, followed by pressuring and then cooling, which is so-called cold pressing; and

2') the plate-shaped prepreg is introduced in a mold, press molding is conducted while rising a temperature to a melting point or higher or a glass transition point or higher of the thermoplastic resin, and the mold is cooled to lower than a melting point or lower than a glass transition point of the thermoplastic resin, which is so-called hot pressing.

In the step 1), a plurality of random mats may be layered to obtain a desired thickness and fiber areal weight of fibers, and the layered body can be pressed.

Example

The present invention is described in further specifically by examples, but the invention is not limited by them.

1) Analysis of reinforcing fiber bundle in random mat

The ratio of the reinforcing bundles (A) to the total amount of reinforcing fibers in a mat is obtained as follows.

A random mat is cut into a size of 100 mm × 100 mm, and a thickness (Ta) and a weight (Wa) are measured.

Fiber bundles are all extracted by tweezers from the mat cut, and classified into every diameter. In this example, the fiber bundles were classified with a unit of a diameter of about 0.2 mm.

Length (Li), weight (Wi) and the number of fiber bundles (I) are measured every classification, and recorded. For fiber bundles that are small to such an extent that the bundles cannot be extracted by tweezers, it's the weight (Wk) thereof is finally measured as a whole. In this case, a balance measurable up to 1/1,000 g is used. Particularly, in the case that the reinforcing fibers are carbon fibers and in the case that fiber length is short, a weight of a fiber bundle is small, and measurement becomes difficult. In such a case, a plurality of fiber bundles classified is gathered, and the weight thereof is measured.

After the measurement, the following calculation is conducted. The number (Ni) of fibers of the individual fiber bundle was obtained from a fineness (F) of reinforcing fibers used by the following formula.

$$Ni=Wi/(Li{\times}F)$$

The average number (N) of fibers in the reinforcing fiber bundles (A) is determined by the following formula.

$$N={\Sigma}Ni/I$$

The volume (Vi) of the individual reinforcing fiber bundles and the ratio (VR) of the reinforcing fiber bundle (A) to the entire reinforcing fibers were obtained by the following formulae using a fiber gravity ($\rho$) of the reinforcing fibers used.

$$Vi=Wi/\rho$$

$$VR={\Sigma}Vi/Va{\times}100$$

wherein Va is a volume of a mat cut, and Va=100×100×Ta.

2) Analysis of reinforcing fiber bundle in shaped product

A shaped product was heated in a furnace at 500°C for about 1 hour to remove a resin, and was subjected to the same measurement as the method described in the random mat as above.

3) Analysis of fiber orientation in shaped product

After molding a composite material, isotropy of fibers was confirmed by conducting a tensile test on the basis of an arbitrary direction of a shaped plate and a direction perpendicular to the direction to measure tensile modulus, and a ratio (Eδ) is obtained by dividing larger value in the measured values of the tensile modulus by smaller value therein. A material has excellent isotropy as the ratio of elasticity approaches 1.

4) Analysis of average fiber length of reinforcing fibers contained in shaped product

An average fiber length of the reinforcing fibers contained in the shaped product obtained was obtained as follows. The shaped product was heated in a furnace at 500°C for about 1 hour to remove a resin. Lengths of 100 reinforcing fibers arbitrarily extracted were measured by a loupe up to a unit of 1 mm, and recorded. The average fiber length (La) was obtained from lengths (Li) of all of reinforcing fibers measured by the following formula.

$$La=\Sigma Li/100$$

Reference Example 1

Carbon fibers (carbon fiber TENAX (registered trademark) STS40-24KS (fiber diameter: 7 μm, tensile strength: 4,000 MPa), manufactured by Toho Tenax Co., Ltd.) were cut into a length of 20 mm while opening, and were introduced in a taper tube in a feed rate of 300 g/min. Air was blown to the carbon fibers in the taper tube to partially open the fiber bundle, and the carbon fibers were sprayed on a table provided at a lower part of a taper tube outlet. PA66 fibers (T5 Nylon, 1400 dtex, manufactured by Asahi Kasei Fibers Corporation) dry cut in 2 mm were supplied as a matrix resin to the taper tube in a rate of 500 g/min, and sprayed simultaneously with the carbon fibers. Thus, a random mat having a thickness of about 4 mm in which the carbon fibers having an average fiber length of 20 mm and PA66 were mixed was obtained. The form of the reinforcing fibers in the random mat was observed. As a result, a fiber axis of the reinforcing fibers is nearly parallel to a plane, and the reinforcing fibers were randomly spread in a plane. The average fiber length (La), the ratio of the reinforcing fiber bundles (A) and the average number (N) of fibers of the random mat obtained, were examined. As a result, the average fiber length (La) was 20 mm, the critical single fiber number defined by the formula (3) was 86, the ratio of the reinforcing fiber bundles (A) to the total amount of fibers in the mat was 35%, and the average number (N) of the reinforcing fibers in the reinforcing fiber bundles (A) was 240.

The random mat was heated under 2.0 MPa for 5 minutes by a press machine heated to 280°C to obtain a shaped plate having a thickness of 0.8 mm.
The fiber volume fraction of the shaped plate obtained was about 30 vol%.

Reference Example 2

Carbon fibers (carbon fiber TENAX (registered trademark) IMS60-12K (average fiber diameter: 5 μm, fiber width: 6 mm), manufactured by Toho Tenax Co., Ltd.) were cut into a length of 30 mm, and were introduced in a taper tube in a feed rate of 1,000 g/min. Air was blown to the carbon fibers in the taper tube to partially open the fiber bundle, and the carbon fibers were sprayed on a table provided at a lower part of a taper tube outlet. PC resin (PANLITE (registered trademark) L-1225L, manufactured by Teijin Chemicals Ltd.) freeze-pulverized into an average particle diameter of about 1 mm were supplied as a matrix resin to the taper tube in a rate of 3,000 g/min, and sprayed simultaneously with the carbon fibers. Thus, a random mat having a thickness of about 10 mm in which the carbon fibers having an average fiber length of 30 mm and PC were mixed was obtained. The form of the reinforcing fibers in the random mat was observed. As a result, a fiber axis of the reinforcing fibers is nearly parallel to a plane, and the reinforcing fibers were randomly spread in a plane. The average fiber length (La), the ratio of the reinforcing fiber bundles (A) and the average number (N) of fibers, of the random mat obtained were examined. As a result, the average fiber length (La) was 30 mm, the critical single fiber number defined by the formula (3) was 120, the ratio of the reinforcing fiber bundle (A) to the total amount of fibers of the mat was 80%, and the average number (N) of fibers in the reinforcing fiber bundles (A) was 1,000. The random mat was heated under 2.0 MPa for 5 minutes by a press machine heated to 300°C to obtain a shaped plate having a thickness of 3 mm.

The fiber volume fraction of the shaped plate obtained was about 20 vol%.

Reference Example 3

Glass fibers (EX-2500 (average fiber diameter: 15 μm, fiber width: 9 mm), manufactured by Asahi Glass Co., Ltd.) were cut into a length of 50 mm, and were introduced in a taper tube in a feed rate of 1,200 g/min. Air was blown to the carbon fibers in the taper tube to partially open the fiber bundle, and the carbon fibers were sprayed on a table provided at a lower part of a taper tube outlet. PA66 fibers (T5 Nylon, 1400 dtex, manufactured by Asahi Kasei Fibers Corporation) dry cut in 2 mm were supplied as a matrix resin to the taper tube in a rate of 1,300 g/min, and sprayed simultaneously with the carbon fibers. Thus, a random mat having a thickness of about 6 mm in which the carbon fibers having an average fiber length of 50 mm and PA66 were mixed was obtained. The form of the reinforcing fibers in the random mat was observed. As a result, a fiber axis of the reinforcing fibers is nearly parallel to a plane, and the reinforcing fibers were randomly spread in a plane. The average fiber length (La), the ratio of the reinforcing fiber bundles (A) and the average number (N) of fibers, of the random mat obtained were examined. As a result, the average fiber length (La) was 50 mm, the critical single fiber number defined by the formula (3) was 40, the ratio of the reinforcing fiber bundle (A) to the total amount of fibers of the mat was 60%, and the average number (N) of fibers in the reinforcing fiber bundle (A) was 60. The random mat was heated under 2.0 MPa for 5 minutes by a press machine heated to 280°C to obtain a shaped plate having a thickness of 1.6 mm.

The fiber volume fraction of the shaped plate obtained was about 30 vol%.

Reference Example 4

Carbon fibers (carbon fiber TENAX (registered trademark) STS40-24KS (fiber diameter: 7 μm, tensile strength: 4,000 MPa), manufactured by Toho Tenax Co., Ltd.) were cut into a length of 20 mm while opening, and were introduced in a taper tube in a feed rate of 300 g/min. Without blowing air to the carbon fibers in the taper tube, the carbon fibers were sprayed on a table provided at a lower part of a taper tube outlet. PA66 fibers (T5 Nylon, 1400 dtex, manufactured by Asahi Kasei Fibers Corporation) dry cut in 2 mm were supplied as a matrix resin to the taper tube in a rate of 500 g/min, and sprayed simultaneously with the carbon fibers. Thus, a random mat having a thickness of about 1 mm in which the carbon fibers having an average fiber length of 20 mm and PA66 were mixed was obtained. The average fiber length (La) and the ratio of the reinforcing fiber bundles (A) and the average number (N) of fibers, of the random mat obtained were examined. As a result, the average fiber length (La) was 20 mm, the critical single fiber number defined by the formula (3) was 86, the ratio of the reinforcing fiber bundles (A) to the total amount of fibers of the mat was 100%, and the average number (N) of fibers in the reinforcing fiber bundle (A) was 24,000.

The random mat was heated under 2.0 MPa for 5 minutes by a press machine heated to 280°C to obtain a shaped plate having a thickness of 0.8 mm.

The fiber volume fraction of the shaped plate obtained was about 30 vol%.

Example 1

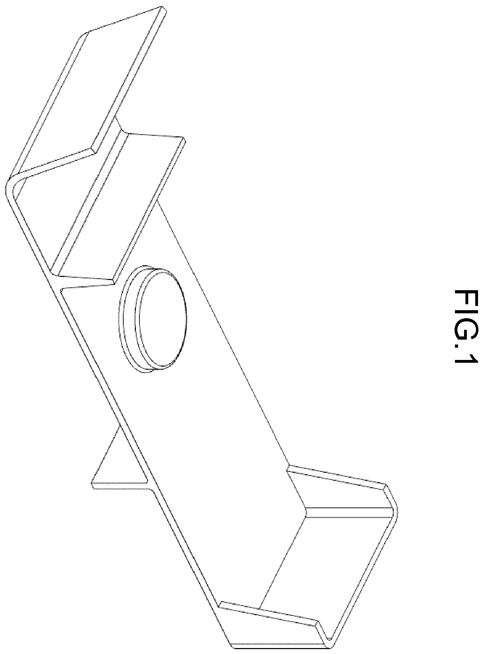

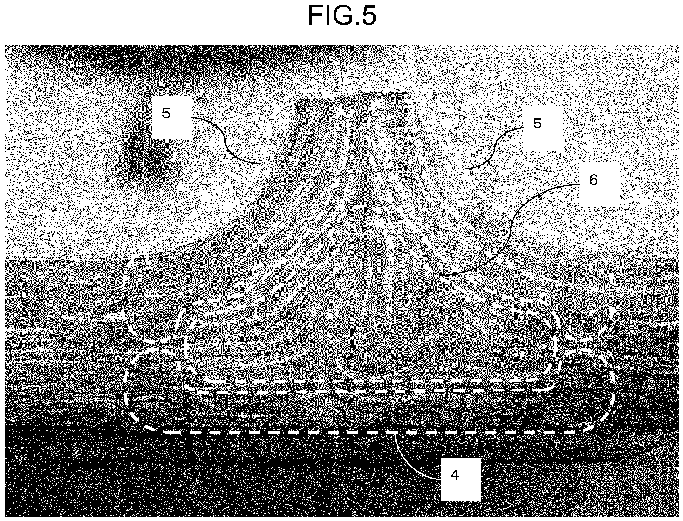

Seven shaped plates prepared in Reference Example 1, heated to 280°C in an IR oven were layered, and the resulting layered body was arranged on a horizontal portion of a mold having a shape shown in Fig. 1 and set to 120°C such that the charge rate is 90%, and press molding was conducted under a pressure of 15 MPa. It could be confirmed by cross-sectional observation (10 times zoom) that the shaped product obtained was a shaped product in which the resin and fibers were filled up to the end of the upright portion. Tensile modulus of the horizontal portion and the upright portion of the shaped product were measured. As a result, the ratio (Eδ) obtained by dividing larger value of values of tensile modulus measured in two directions perpendicular to each other by smaller value thereof was 1.05, and it could be conformed that isotropy was maintained. Furthermore, cross-section observation (10 times zoom) was conducted to a root of the upright portion. As a result, as shown in Fig. 5, it could be confirmed that the layer (X) in which the reinforcing fibers are isotropic in a plane and are two-dimensionally oriented, the layer (Y) in which the reinforcing fibers are continuously oriented in the horizontal portion and the upright portion, and the layer (Z) in which the reinforcing fibers are not two-dimensionally oriented in a plane and are not continuously oriented in the horizontal portion and the upright portion, were present. The average fiber length (La), the ratio of the reinforcing fiber bundles (A) and the average number (N) of fibers, of the horizontal portion of the shaped product obtained were examined. As a result, the average fiber length (La) was 20 mm, the critical single fiber number defined by the formula (1) was 86, the ratio of the reinforcing fiber bundles (A) to the total amount of fibers of the shaped product was 35%, and the average number (N) of fibers in the reinforcing fiber bundle (A) was 240. Similarly, the average fiber length (La), the ratio of the reinforcing fiber bundles (A) and the average number (N) of fibers, of the upright portion were examined. As a result, the critical single fiber number defined by the formula (1) was 86, the average fiber length (La) was 19 mm, the ratio of the reinforcing fiber bundles (A) to the total amount of fibers of the shaped product was 40%, and the average number (N) of fibers in the reinforcing fiber bundles (A) was 230.

Example 2

Two shaped plates prepared in Reference Example 2, heated to 300°C in an IR oven were layered, and the resulting layered body was arranged on a horizontal portion of a mold having a shape shown in Fig. 1 and set to 150°C such that the charge rate is 85%, and press molding was conducted under a pressure of 15 MPa. It could be confirmed by cross-sectional observation (10 times zoom) that the shaped product obtained was a shaped product in which the resin and fibers were filled up to the end of the upright portion. Tensile modulus of the horizontal portion and the upright portion of the shaped product was measured. As a result, the ratio (E$\delta$) obtained by dividing larger value of values of tensile modulus measured in two directions perpendicular to each other by smaller value thereof was 1.07, and it could be conformed that isotropy was maintained. Furthermore, cross-section observation (10 times zoom) was conducted in a root of the upright portion. As a result, similar to Example 1, it could be confirmed that the layer (X) in which the reinforcing fibers are isotropic in a plane and are two-dimensionally oriented, the layer (Y) in which the reinforcing fibers are continuously oriented in the horizontal portion and the upright portion, and the layer (Z) in which the reinforcing fibers are not two-dimensionally oriented in a plane and are not continuously oriented in the horizontal portion and the upright portion, were present. The average fiber length (La), the ratio of the reinforcing fiber bundles (A) and the average number (N) of fibers, of the horizontal portion of the shaped product obtained were examined. As a result, the average fiber length (La) was 29 mm, the critical single fiber number defined by the formula (1) was 120, the ratio of the reinforcing fiber bundles (A) to the total amount of fibers of the shaped product was 80%, and the average number (N) of fibers in the reinforcing fiber bundles (A) was 1,000. Similarly, the average fiber length (La), the ratio of the reinforcing fiber bundles (A) and the average number (N) of fibers, of the upright portion were examined. As a result, the critical single fiber number defined by the formula (1) was 86, the average fiber length (La) was 28 mm, the ratio of the reinforcing fiber bundles (A) to the total amount of fibers of the shaped product was 80%, and the average number (N) of fibers in the reinforcing fibers bundle (A) was 950.

Example 3

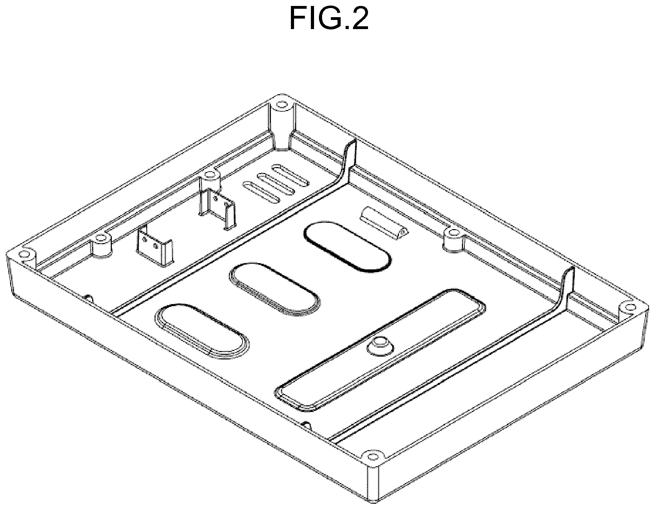

The shaped plate prepared in Reference Example 3, heated to 280°C in an IR oven was arranged on a horizontal portion of a mold having a shape shown in Fig. 2 and set to 120°C such that the charge rate is 99%, and press molding was conducted under a pressure of 15 MPa. It could be confirmed by cross-sectional observation (10 times zoom) that the shaped product obtained was a shaped product in which the resin and fibers were filled up to the end of a boss, a rib, a frame part and the like. Tensile modulus of the horizontal portion of the shaped product was measured. As a result, the ratio obtained by dividing larger value of values of tensile modulus measured in two directions perpendicular to each other by smaller value thereof was 1.05, and it could be conformed that isotropy was maintained. Tensile modulus of the frame part of the shaped product was measured. As a result, the ratio (E$\delta$) obtained by dividing larger value of values of tensile modulus measured in two directions perpendicular to each other by smaller value thereof was 1.07, and it could be confirmed that isotropy was maintained. Furthermore, cross-section observation (10 times zoom) was conducted in the upright portion of the frame part. As a result, similar to Example 1, it could be confirmed that the layer (X) in which the reinforcing fibers are isotropic in a plane and are two-dimensionally oriented, the layer (Y) in which the reinforcing fibers are continuously oriented in the horizontal portion and the upright portion, and the layer (Z) in which the reinforcing fibers are not two-dimensionally oriented in a plane, and are not continuously oriented in the horizontal portion and the upright portion, were present. The average fiber length (La), the ratio of the reinforcing fiber bundles (A) and the average number (N) of fibers, of the horizontal portion of the shaped product obtained were examined. As a result, the average fiber length (La) was 50 mm, the critical single fiber number defined by the formula (1) was 40, the ratio of the reinforcing fiber bundles (A) to the total amount of fibers of the shaped product was 60%, and the average number (N) of fibers in the reinforcing fiber bundles (A) was 60. Similarly, the average fiber length (La) the ratio of the reinforcing fiber bundle (A) and the average number (N) of fibers, of the frame part were examined. As a result, the critical single fiber number defined by the formula (1) was 40, the average fiber length (La) was 48 mm, the ratio of the reinforcing fiber bundles (A) to the total amount of fibers of the shaped product was 58%, and the average number (N) of fibers in the reinforcing fiber bundles (A) was 60.

Comparative Example 1

Molding was conducted in the same manner as in Example 1, except for using the shaped plate prepared in Reference Example 4. The shaped product obtained was a shaped product in which fiber fluidization could be visually confirmed in the upright portion, and tensile modulus of the upright portion was measured. As a result, the ratio (E$\delta$) obtained by dividing larger value of values of tensile modulus measured in two directions perpendicular to each other by smaller value thereof was 2.1, and it could be confirmed that isotropy was impaired. Furthermore, cross-section observation (10 times zoom) was conducted in a root of the upright portion. As a result, the layer (X) in which the reinforcing fibers are isotropic in a plane and are two-dimensionally oriented, and the layer (Z) in which the reinforcing fibers are not two-dimensionally oriented in a plane and are not continuously oriented in the horizontal portion and the upright portion, were not present, and only the layer (Y) in which the reinforcing fibers are continuously oriented in the horizontal portion and the upright portion was present. The average fiber length (La), the ratio of the reinforcing fiber bundle (A) and the average number (N) of fibers, of the horizontal portion of the shaped product obtained were examined. As a result, the average fiber length (La) was 20 mm, the critical single fiber number defined by the formula (1) was 86, the ratio of the reinforcing fiber bundles (A) to the total amount of fibers of the shaped product was 100%, and the average number (N) of fibers in the reinforcing fiber bundles (A) was 24,000. Similarly, the average fiber length (La), the ratio of the reinforcing fiber bundles (A) and the average number (N) of fibers, of the horizontal portion were examined. As a result, the critical single fiber number defined by the formula (1) was 86, the average fiber length (La) was 20 mm, the ratio of the reinforcing fiber bundles (A) to the total amount of fibers of the shaped product was 100%, and the average number (N) of fibers in the reinforcing fiber bundles (A) was 24,000.

Industrial Applicability

The shaped product of the present invention can be utilized in wide range such as housings for electric and electronic equipments, parts for automobiles, parts for medical equipments, parts for aircrafts, building materials and parts for general industries, and is particularly preferred for use in housings for electric and electronic equipments.

Description of Reference Numerals and Signs

1 Horizontal portion

1A Horizontal portion (partial unevenness, beads are present)
1B Horizontal portion (through-hole)
1C Horizontal portion (plate thickness change is present)

2 Upright portion

2A Upright portion (side wall)
2B Upright portion (rib)
2C Upright portion (boss)
2D Upright portion (mount)
2E Upright portion (hinge)

3 Junction
4 Layer (X) in which the reinforcing fibers are isotropic in a plane and are two-dimensionally oriented
5 Layer (Y) in which the reinforcing fibers are continuously oriented in the horizontal portion and the upright portion
6 Layer (Z) in which the reinforcing fibers are not two-dimensionally oriented in a plane, and are not continuously oriented in the horizontal portion and the upright portion

**Claims**

1. A shaped product comprising a reinforced composite material including discontinuous reinforcing fibers contained in a thermoplastic resin,
   wherein the reinforcing fibers contained in the shaped product have an average fiber length of 5 to 100 mm, and include (i) a reinforcing fiber bundle (A) comprising the reinforcing fibers of a critical single fiber number defined by formula (1) or more, a ratio of the reinforcing fiber bundle (A) to a total amount of the reinforcing fibers in the shaped product is 20 vol% or more and less than 90 vol%, and an average number (N) of the reinforcing fibers in the reinforcing fiber bundle (A) satisfies the following formula (2), and (ii) reinforcing fibers (B) which is a bundle constituted by reinforcing fibers less than the critical single fiber number:

$$\text{critical single fiber number} = 600/D \tag{1}$$

$$0.7 \times 10^4/D^2 < N < 1 \times 10^5/D^2 \tag{2}$$

wherein D is an average fiber diameter ($\mu$m) of the reinforcing fibers;
wherein the shaped product comprises:

a horizontal portion; and
an upright portion extending in a longitudinal direction to the horizontal portion;
wherein the horizontal portion and the upright portion each have a layer (X) in which the reinforcing fibers are isotropic in a plane and are two-dimensionally oriented.

2. The shaped product according to claim 1, wherein the horizontal portion is a ceiling or a bottom wall of a housing or a panel-shaped member.

3. The shaped product according to claim 1, wherein the upright portion is at least one member selected from the group consisting of a side wall, a rib, a boss, a mount and a hinge of a housing or a panel-shaped member.

4. The shaped product according to claim 1, wherein a junction between the horizontal portion and the upright portion has at least two kinds selected from the group consisting of a layer (X) in which the reinforcing fibers are isotropic in a plane and are two-dimensionally oriented, a layer (Y) in which the reinforcing fibers are continuously oriented in the horizontal portion and the upright portion, and a layer (Z) in which the reinforcing fibers are not two-dimensionally oriented in a plane and are not continuously oriented in the horizontal portion and the upright portion.

5. The shaped product according to claim 1, wherein a plurality of the upright portions are present at the same plane side to the horizontal portion.

6. The shaped product according to claim 5, wherein the layer (X) in which the reinforcing fibers are isotropic in a plane and are two-dimensionally oriented is continuously present on a plane facing the upright portions in the horizontal portion.

7. The shaped product according to claim 1, further comprising a layer including a unidirectional material in which continuous fibers are arranged along one direction in the thermoplastic resin, in the horizontal portion and/or the upright portion.

8. The shaped product according to claim 1, wherein the reinforcing fiber is at least one selected from the group consisting of a carbon fiber, an aramide fiber, a polyester fiber and a glass fiber.

9. Use of the shaped product according to claim 1 as housings for an electric and electronic equipment.

10. A method for manufacturing the shaped product according to claim 1, comprising obtaining the shaped product by press-molding a random mat,
wherein the random mat comprises reinforcing fibers having a fiber length of 5 to 100 mm and a thermoplastic resin, a fiber areal weight of the reinforcing fibers are 25 to 3,000 g/m², and a ratio of a reinforcing fiber bundle (A) comprising the reinforcing fibers of a critical single fiber number defined by the following formula (1) or more to a total amount of the reinforcing fibers in the mat is 20 vol% or more and less than 90 vol%, and an average number (N) of the reinforcing fibers in the reinforcing fiber bundle (A) satisfies the following formula (2):

$$\text{critical single fiber number} = 600/D \tag{1}$$

$$0.7 \times 10^4/D^2 < N < 1 \times 10^5/D^2 \qquad (2)$$

wherein D is an average fiber diameter ($\mu$m) of the reinforcing fibers.

11. The method for manufacturing the shaped product according to claim 10, further comprising:

arranging the random mat heated in a mold such that a charge rate represented by formula (3) is 25 to 100%; and press-molding the random mat:

$$\text{charge rate} = 100 \times \text{base material area (mm}^2)/\text{mold cavity projected area (mm}^2) \qquad (3)$$

wherein the mold cavity projected area means a projected area in a draft direction.


**Patentansprüche**

1. Formkörper, umfassend ein verstärktes Verbundstoffmaterial mit diskontinuierlichen Verstärkungsfasern, die in einem thermoplastischen Harz enthalten sind,
wobei die in dem Formkörper enthaltenen Verstärkungsfasern eine mittlere Faserlänge von 5 bis 100 mm aufweisen und (i) ein Verstärkungsfaserbündel (A), das die Verstärkungsfasern mit einer durch Formel (1) definierten kritischen Zahl von Einzelfasern oder mehr umfasst, wobei das Verhältnis des Verstärkungsfaserbündels (A) zu der Gesamtmenge der Verstärkungsfasern in dem Formkörper 20 Vol.-% oder mehr und weniger als 90 Vol.-% beträgt und die mittlere Zahl (N) der Verstärkungsfasern in dem Verstärkungsfaserbündel (A) der nachstehenden Formel (2) entspricht, und (ii) Verstärkungsfasern (B), die ein Bündel sind, das von weniger Verstärkungsfasern als die kritische Zahl von Einzelfasern gebildet wird, umfassen:

```
kritische Zahl von Einzelfasern = 600/D    (1)
```

```
0,7 x 10⁴/D² < N < 1 x 10⁵/D²              (2)
```

wobei D der mittlere Faserdurchmesser ($\mu$m) der Verstärkungsfasern ist;
wobei der Formkörper umfasst:
einen waagrechten Teil; und
einen aufrechten Teil, der in einer Längsrichtung zu dem waagrechten Teil verläuft;
wobei der waagrechte Teil und der aufrechte Teil jeweils eine Schicht (X) aufweisen, in der die Verstärkungsfasern in einer Ebene isotrop sind und zweidimensional ausgerichtet sind.

2. Formkörper gemäß Anspruch 1,
wobei der waagrechte Teil eine Decke oder eine Bodenwand eines Gehäuses oder ein plattenförmiges Element ist.

3. Formkörper gemäß Anspruch 1,
wobei der aufrechte Teil wenigstens ein Element ausgewählt aus der Gruppe bestehend aus einer Seitenwand, einer Rippe, einem Vorsprung, einer Halterung und einem Scharnier eines Gehäuses oder eines plattenförmigen Elements ist.

4. Formkörper gemäß Anspruch 1,
wobei eine Verbindung zwischen dem waagrechten Teil und dem aufrechten Teil wenigstens zwei Arten ausgewählt aus der Gruppe bestehend aus einer Schicht (X), in der die Verstärkungsfasern in einer Ebene isotrop sind und zweidimensional ausgerichtet sind, einer Schicht (Y), in der die Verstärkungsfasern in dem waagrechten Teil und dem aufrechten Teil kontinuierlich ausgerichtet sind, und einer Schicht (Z), in der die Verstärkungsfasern nicht in einer Ebene zweidimensional ausgerichtet sind und nicht in dem waagrechten Teil und dem aufrechten Teil kontinuierlich ausgerichtet sind, aufweist.

**5.** Formkörper gemäß Anspruch 1,
wobei eine Vielzahl der aufrechten Teile an der gleichen Ebenenseite des waagrechten Teils vorhanden sind.

**6.** Formkörper gemäß Anspruch 5,
wobei die Schicht (X), in der die Verstärkungsfasern in einer Ebene isotrop sind und zweidimensional ausgerichtet sind, kontinuierlich auf einer Ebene in dem waagrechten Teil vorhanden ist, die den aufrechten Teilen zugewandt ist.

**7.** Formkörper gemäß Anspruch 1,
ferner umfassend eine Schicht, die ein unidirektionales Material enthält, in dem kontinuierliche Fasern entlang einer Richtung in dem thermoplastischen Harz angeordnet sind, in dem waagrechten Teil und/oder dem aufrechten Teil.

**8.** Formkörper gemäß Anspruch 1,
wobei die Verstärkungsfaser wenigstens eine ausgewählt aus der Gruppe bestehend aus einer Carbonfaser, einer Aramidfaser, einer Polyesterfaser und einer Glasfaser ist.

**9.** Verwendung des Formkörpers gemäß Anspruch 1 als Gehäuse für eine elektrische oder elektronische Vorrichtung.

**10.** Verfahren zum Herstellen des Formkörpers gemäß Anspruch 1, umfassend Erhalten des Formkörpers durch Formpressen eines regellosen Vlieses,
wobei das regellose Vlies Verstärkungsfasern mit einer Faserlänge von 5 bis 100 mm und ein thermoplastisches Harz umfasst, das Faser-Flächengewicht der Verstärkungsfasern 25 bis 3.000 g/m$^2$ beträgt und das Verhältnis eines Verstärkungsfaserbündels (A), das die Verstärkungsfasern mit einer durch die nachstehende Formel (1) definierten kritischen Zahl von Einzelfasern oder mehr umfasst, zu der Gesamtmenge der Verstärkungsfasern in dem Vlies 20 Vol.-% oder mehr und weniger als 90 Vol.-% beträgt und die mittlere Zahl (N) der Verstärkungsfasern in dem Verstärkungsfaserbündel (A) der nachstehenden Formel (2) entspricht:

$$\text{kritische Zahl von Einzelfasern} = 600/D \quad (1)$$

$$0{,}7 \times 10^4/D^2 < N < 1 \times 10^5/D^2 \quad (2)$$

wobei D der mittlere Faserdurchmesser ($\mu$m) der Verstärkungsfasern ist.

**11.** Verfahren zum Herstellen des Formkörpers gemäß Anspruch 10, ferner umfassend:

Anordnen des erhitzten regellosen Vlieses in einem Formwerkzeug, so dass die von Formel (3) dargestellte Beladungsrate 25 bis 100 % beträgt; und
Pressformen des regellosen Vlieses:

$$\text{Beladungsrate} = 100 \times \text{Grundmaterial-Fläche (mm}^2)/\text{projizierte Fläche des Formwerkzeug-Hohlraums (mm}^2) \quad (3)$$

wobei die projizierte Fläche des Formwerkzeug-Hohlraums eine in einer Bezugsrichtung projizierte Fläche bedeutet.

**Revendications**

**1.** Produit façonné comprenant un matériau composite renforcé comprenant des fibres renforçantes discontinues contenues dans une résine thermoplastique,

les fibres renforçantes contenues dans le produit façonné ayant une longueur moyenne de fibre de 5 à 100 mm et comprenant (i) un faisceau de fibres renforçantes (A) comprenant les fibres renforçantes en nombre supérieur ou égal à un nombre critique de fibres individuelles défini par la formule (1), la proportion du faisceau de fibres renforçantes (A) par rapport à la quantité totale des fibres renforçantes dans le produit façonné étant supérieure ou égale à 20 % en volume et inférieure à 90 % en volume et le nombre moyen (N) des fibres renforçantes dans le faisceau de fibres renforçantes (A) satisfaisant à la formule (2) suivante, et (ii) des fibres renforçantes (B) qui sont un faisceau constitué par des fibres renforçantes en nombre inférieur au nombre critique de fibres individuelles :

$$\text{nombre critique de fibres individuelles} = 600/D \quad (1)$$

$$0,7 \times 10^4/D^2 < N < 1 \times 10^5/D^2 \quad (2),$$

D étant le diamètre moyen de fibre ($\mu$m) des fibres renforçantes ;
le produit façonné comprenant :

une partie horizontale ; et
une partie montante s'étendant dans une direction longitudinale par rapport à la partie horizontale ;
dans lequel la partie horizontale et la partie montante ont chacune une couche (X) dans laquelle les fibres renforçantes sont isotropes dans un plan et sont orientées de façon bidimensionnelle.

2. Produit façonné selon la revendication 1,
dans lequel la partie horizontale est un couvercle ou un fond d'un boîtier ou un élément en forme de panneau.

3. Produit façonné selon la revendication 1,
dans lequel la partie montante est au moins un élément choisi dans le groupe constitué par une paroi latérale, une nervure, un bossage, un support de montage et une charnière d'un boîtier ou d'un élément en forme de panneau.

4. Produit façonné selon la revendication 1,
dans lequel une jonction entre la partie horizontale et la partie montante a au moins deux sortes de couche choisies dans le groupe constitué par une couche (X) dans laquelle les fibres renforçantes sont isotropes dans un plan et sont orientées de façon bidimensionnelle, une couche (Y) dans laquelle les fibres renforçantes sont orientées de façon continue dans la partie horizontale et la partie montante et une couche (Z) dans laquelle les fibres renforçantes ne sont pas orientées de façon bidimensionnelle dans un plan et ne sont pas orientées de façon continue dans la partie horizontale et la partie montante.

5. Produit façonné selon la revendication 1,
dans lequel une pluralité des parties montantes sont présentes du même côté du plan par rapport à la partie horizontale.

6. Produit façonné selon la revendication 5,
dans lequel la couche (X) dans laquelle les fibres renforçantes sont isotropes dans un plan et sont orientées de façon bidimensionnelle est présente de façon continue sur un plan en regard des parties montantes dans la partie horizontale.

7. Produit façonné selon la revendication 1, comprenant en outre une couche comprenant un matériau unidirectionnel dans lequel des fibres continues sont disposées le long d'une direction dans la résine thermoplastique, dans la partie horizontale et/ou la partie montante.

8. Produit façonné selon la revendication 1,
dans lequel la fibre renforçante en est au moins une choisie dans le groupe constitué par une fibre de carbone, une fibre d'aramide, une fibre de polyester et une fibre de verre.

9. Utilisation du produit façonné selon la revendication 1 en tant que boîtiers pour un matériel électrique et électronique.

10. Procédé pour la fabrication du produit façonné selon la revendication 1, comprenant l'obtention du produit façonné par moulage à la presse d'un mat aléatoire,

dans lequel le mat aléatoire comprend des fibres renforçantes ayant une longueur de fibre de 5 à 100 mm et une résine thermoplastique, la masse surfacique de fibre des fibres renforçantes est de 25 à 3 000 g/m$^2$ et la proportion d'un faisceau de fibres renforçantes (A) comprenant les fibres renforçantes en nombre supérieur ou égal à un nombre critique de fibres individuelles défini par la formule (1) suivante par rapport à la quantité totale des fibres renforçantes dans le mat est supérieure ou égale à 20 % en volume et inférieure à 90 % en volume et le nombre moyen (N) des fibres renforçantes dans le faisceau de fibres renforçantes (A) satisfait à la formule (2) suivante :

$$\text{nombre critique de fibres individuelles} = 600/D \quad (1)$$

$$0,7 \times 10^4/D^2 < N < 1 \times 10^5/D^2 \quad (2),$$

D étant le diamètre moyen de fibre ($\mu$m) des fibres renforçantes.

11. Procédé pour la fabrication du produit façonné selon la revendication 10, comprenant en outre :

la disposition du mat aléatoire chauffé dans un moule de façon telle qu'un taux de charge représenté par la formule (3) soit de 25 à 100 % ; et
le moulage à la presse du mat aléatoire :

$$\text{taux de charge} = 100 \times \text{surface du matériau de base} \ (\text{mm}^2)/\text{surface projetée de la cavité du moule} \ (\text{mm}^2) \quad (3),$$

la surface projetée de la cavité du moule désignant une surface projetée dans une direction de dépouille.

# FIG.1

# FIG.2

# FIG.3

B    C

A                    A

B    B

B-B    C-C

A-A

# FIG.4

## FIG.5

**REFERENCES CITED IN THE DESCRIPTION**

**Patent documents cited in the description**

- JP 2010147376 A
- JP 2010131804 A
- JP 2009114611 A
- JP 2009114612 A
- EP 0483716 A1